(19) Europäisches Patentamt
European Patent Office
Office européen des brevets

(11) **EP 2 045 623 A1**

(12) **EUROPEAN PATENT APPLICATION**

(43) Date of publication:
**08.04.2009 Bulletin 2009/15**

(51) Int Cl.:
*G01S 13/86* (2006.01)    *G01S 13/93* (2006.01)

(21) Application number: **08014798.6**

(22) Date of filing: **20.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.09.2007 JP 2007252948**

(71) Applicant: **Hitachi, Ltd.**
**Chiyoda-ku**
**Tokyo (JP)**

(72) Inventors:
• **Otsuka, Yuji**
  **Tokyo 100-8220 (JP)**
• **Takemura, Masayuki**
  **Tokyo 100-8220 (JP)**
• **Monji, Tatsuhiko**
  **Tokyo 100-8220 (JP)**

(74) Representative: **Beetz & Partner**
**Patentanwälte**
**Steinsdorfstrasse 10**
**80538 München (DE)**

(54) **Vehicle detection apparatus**

(57)    Disclosed herein is a vehicle detection apparatus has a first sensor (102) and a second sensor (101) to detect vehicles (601) ahead of the host vehicle (401), and a judging part (205) to judge that, in the case where the second sensor (101) detects an object which the first sensor (102) has detected, the object is a vehicle. The judging part (205) judges the object as a vehicle in the case where it has once judged the object as a vehicle even though the second sensor (101) does not detect the object in the next judgment. The first sensor (102) should preferably be a radar, and the second sensor (101) should preferably be a camera.

FIG.2

**Description**

BACKGROUND OF THE INVENTION

1. Field of the Invention:

The present invention relates to a technology of detecting obstacles by means of a plurality of sensors.

2. Description of the Related Art:

A sensor fusion that employs a monocular camera of lower cost than a stereo camera and the detection results of radar has been proposed. (See Patent Document 1.) In Patent Document 1, a camera searches the object neighbor detected by a radar. That is, since a laser radar restricts the search range of the camera, it is possible to rapidly perform the image processing of the camera.

Patent Document 1:
Japanese Patent Laid-open No. 2006-48435

OBJECT AND SUMMARY OF THE INVENTION

However, in actual, the information of the radar is not necessarily correct at all times. For example, there is a problem that in the case where the radar judges (erratic detection) that a vehicle exists at a position where there is no vehicle, it searches the vehicle in the neighborhood of that position. And, there also is a problem that it judges (non-detection) that there exists no vehicle despite the fact that a vehicle actually exists.

So, the object of the present invention is to provide a vehicle detection apparatus which suppresses erratic detection and non-detection by combining a camera and a radar.

In order to solve the above-mentioned problems, one of the preferred embodiments of the present invention is as follows.

The vehicle detection apparatus has a first and a second sensors to detect vehicles ahead of the host vehicle, and a judgment part to judge that, in the case where the second sensor detects an object which the first sensor has detected, the object is a vehicle.

According to the present invention, it is possible to propose a vehicle detection apparatus to suppress erratic detection and non-detection by combining a camera and a radar.

BRIEF DESCRIPTION OF THE DRAWINGS

Fig. 1 is a construction diagram of the vehicle distance control system.
Fig. 2 is a construction diagram of the vehicle detection part.
Fig. 3 is a construction diagram of the camera.
Fig. 4 is a diagram showing the position relation of the camera and the radar.
Fig. 5 is a flow diagram of the judgment part.
Fig. 6 is a diagram showing the position relation of the host vehicle and the preceding vehicle.
Fig. 7 is a diagram showing the position relation of the host vehicle and the preceding vehicle.

DESCRIPTION OF THE PREFERRED EMBODIMENTS

In the following, embodiments are explained with reference to the drawings.

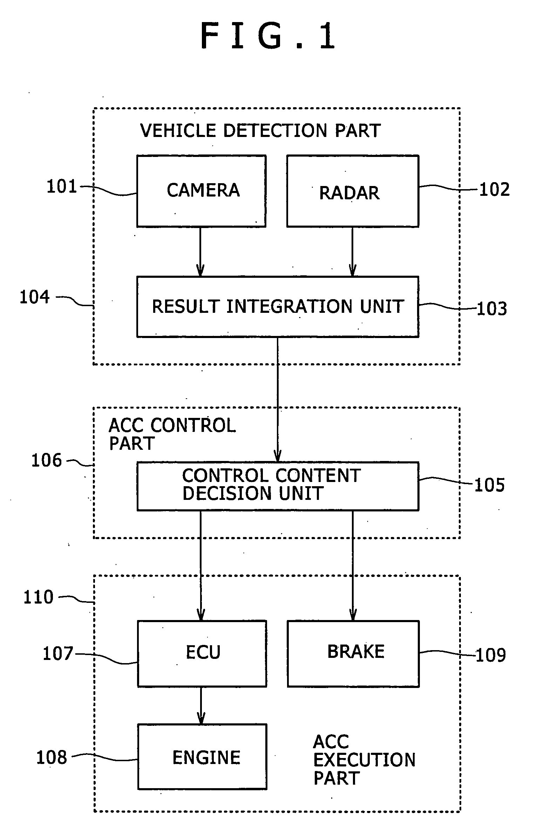

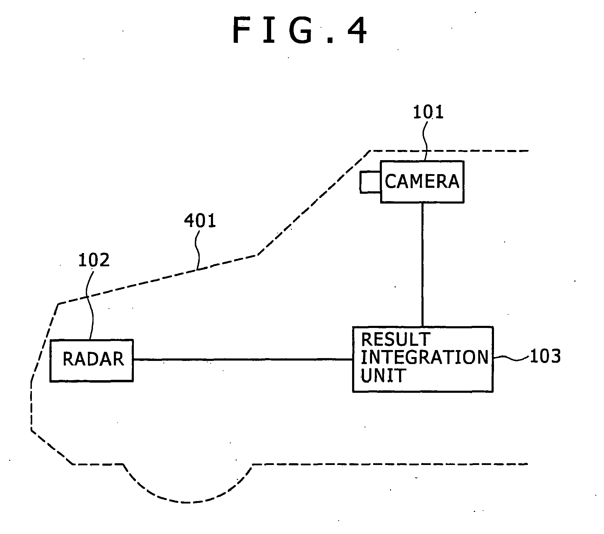

Fig. 1 is a construction diagram of the vehicle distance control system (Adaptive Cruise Control, ACC for short hereinafter). The construction of ACC is roughly divided into three parts of vehicle detection part 104, ACC control part 106, and ACC execution part 110. Of these, the vehicle detection apparatus corresponds to the vehicle detection part 104, which consists of three of camera 101, radar 102, and result integration unit 103. The camera 101 and the radar 102 are so installed as to monitor the front of the host vehicle 401 as shown in Fig. 4.

The radar 102 and the camera 101 perform respectively detection of vehicle candidates ahead, and the result integration unit 103 judges whether or not the detected vehicle candidate is a vehicle and integrates results. In the case where there exists a vehicle, it calculates the position relation of the host vehicle and the detected vehicle, and transmits the position relation to the control content decision unit 105 of the ACC control part 106.

In the control content decision unit 105, if a preceding vehicle exists, from the position relation with the preceding vehicle, control amount is calculated so as to maintain the vehicle distance constant. Also, in the case where there exists no preceding vehicle, control amount is calculated so that the speed approaches the one which has previously been set by the driver. The ECU 107 (Engine Control Unit) of the ACC execution part 110 controls the engine 108 to accelerate or decelerate according to the control amount. In the case where speed reduction is not enough only by engine control, the brake 109 is controlled. Incidentally, the ACC control part 106 and the ACC execution part 110 are known technologies.

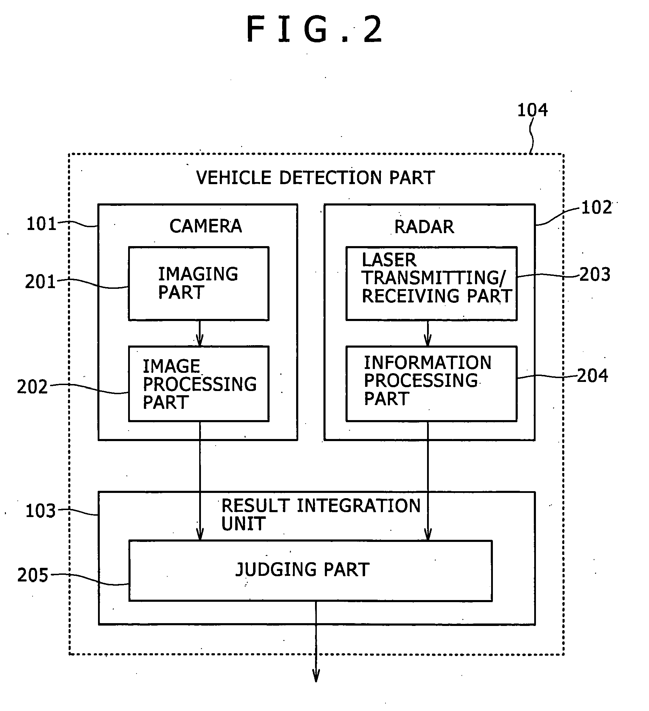

Fig. 2 is a construction diagram of the vehicle detection part 104.

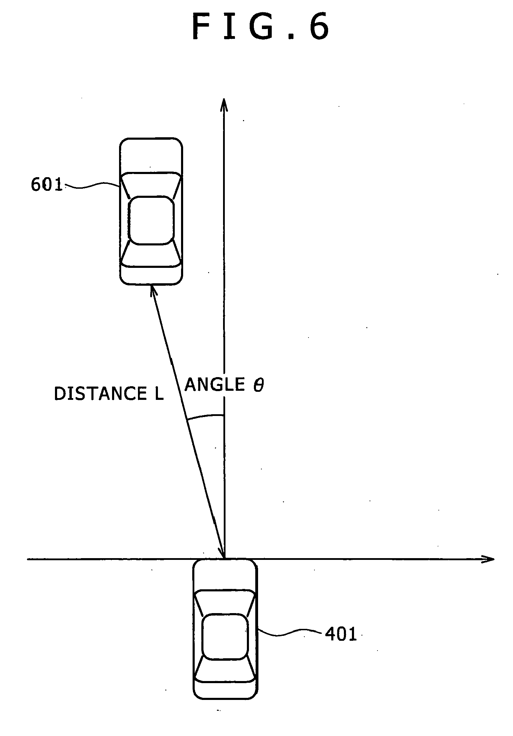

The camera 101 includes an imaging part 201 and an image processing part 202, and not only does it perform imaging but it also functions as a sensor to search vehicle candidates by performing image processing and analysis. The data of vehicle candidates are expressed in terms of the number of vehicle candidates and the positions of the respective vehicle candidates. The position of the vehicle candidate is represented as shown in Fig. 6 by the distance L from the front central part of the host vehicle 401 to the rear central part of the preceding vehicle 601 and the angle $\theta$. As many sets of the distance L and the angle $\theta$ as the number of vehicle candidates is output from the camera. The method for detecting the vehicle candidates through image processing from images obtained from the camera 101 may be realized by, for example, Japanese Patent Application No. 2003-391589 etc. The method for obtaining the distance to the detected vehicle candidates is possible to obtain by the principle of triangular surveying from the parallax of the right and left cameras if the camera 101 is a stereo camera. Also, even though the camera 101 is a monocular camera, it is possible to roughly calculate by utilizing the vehicle width of the preceding vehicle 601 which has formed images in the image.

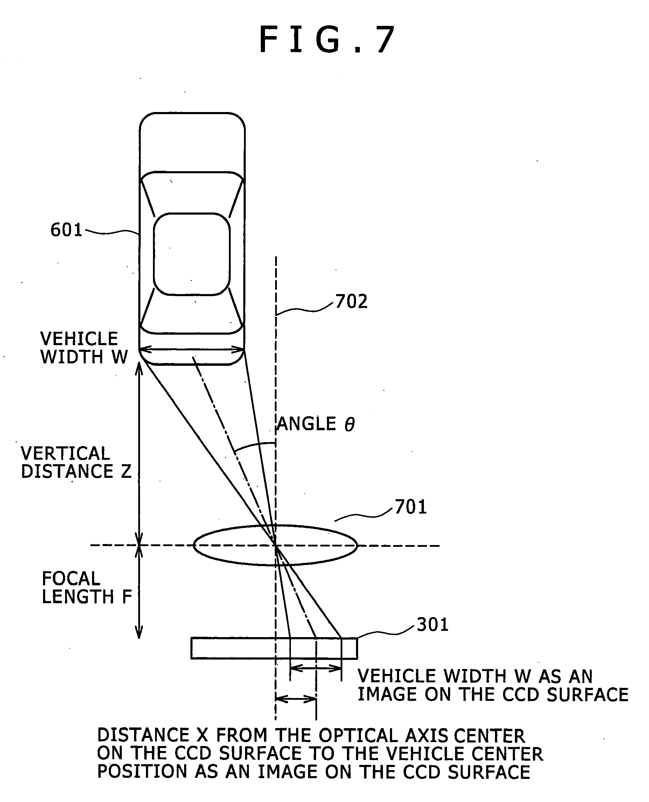

In Fig. 7, since the vehicle width w which has formed images on the CCD surface and the focal length f can be obtained, by assuming that the actual vehicle width of the vehicle is W (to be specific, about 1.7 m which is considered as the vehicle width of average passenger cars), from the principle of triangular surveying,

it can be expressed as

$$Z = \frac{fw}{W}$$

Moreover, the angle $\theta$ is, from the focal length f and the distance x from the optical axis center of the CCD surface to the vehicle central position which has formed images on the CCD surface, is expressed as

$$\theta = \tan^{-1} \frac{x}{f}$$

therefore, the distance L, by using $\theta$ and Z, can be expressed as

$$L = \frac{Z}{\cos\theta}$$

that is, the distance L and the angle $\theta$ that represent the vehicle candidate position to be obtained can be expressed in terms of the known focal length f, the vehicle width W, and w and x which are obtained from the image.

The set of the distance L and the angle $\theta$ thus obtained which represent the vehicle candidate number and the positions of the respective vehicle candidates is sent to the judging part 205 of the result integration unit 103.

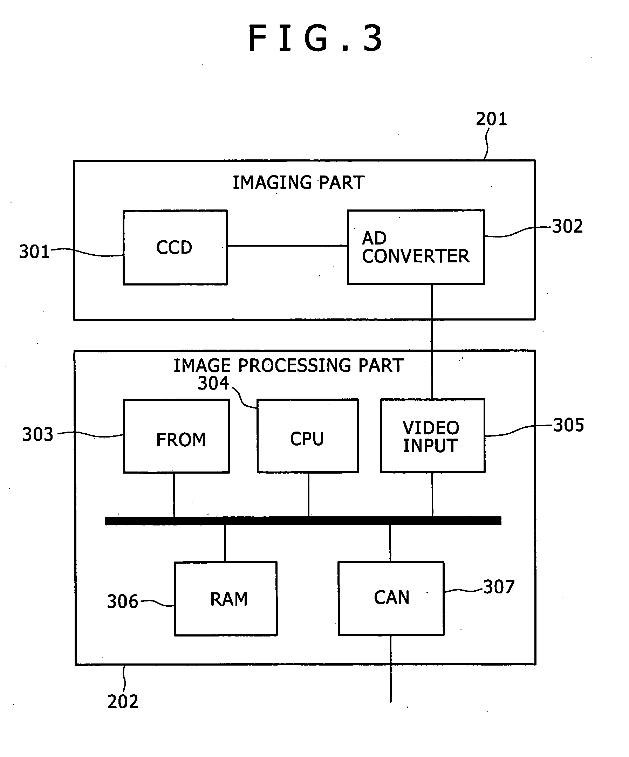

Fig. 3 is a construction diagram of the camera.

Electric charges obtained by sensitization in CCD 301 which is an imaging element are digitized by AD converter 302 and stored in RAM (Random Access Memory) 306 as image data through video input part 305 in image processing part 202. On the other hand, the program of image processing is stored in FROM (Flash Read Only Memory) 303 and is read out by CPU 304 and executed as the power source of the camera is turned on. Image data stored in RAM 306 are processed according to the program to detect the vehicle candidates, and its result which is the number of vehicle candidates and the set of the distance L and the angle $\theta$ which represents the positions of the respective vehicle candidates is sent to the judging part 205 of the result integration unit 103 through the CAN 307 interface.

In the radar 102, too, the number of vehicle candidates and the set of the distance L and the angle θ which represents the positions of the respective vehicle candidates are obtained in the same way as the camera by the laser transmitting/ receiving part 203 and the information processing part 204. Distance measurement of three-dimensional objects by radar is a known technology. The judging part 205 transfers to the ACC control part 106 the set of the distance L and the angle θ which are eventually judged as vehicles by referencing with the results of the camera 101 among the sets of the distance L which the radar 102 has obtained and the angle θ.

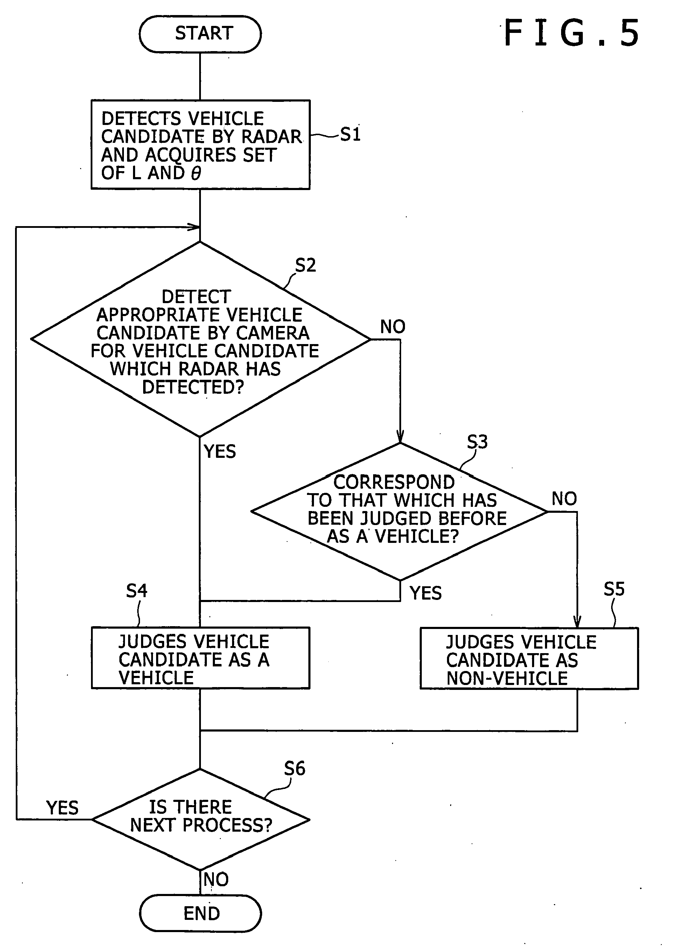

Fig. 5 is a flow chart of the judging part 205.

First, the judging part 205 acquires the number of vehicle candidates through vehicle detection by the radar 102 and each set of the distance L, which represents the positions of respective vehicle candidates, and angle θ, and receives the detection result of the radar and stores it in the memory (S1).

Next, it judges for the vehicle candidate which the radar 102 has detected whether or not the camera 101 also has detected the vehicle candidate concerned (S2). Since to the judging part 205 is sent also from the camera 101 in the same way as the radar 102 the number of vehicle candidates and the distance L, which represents the position of the respective vehicle candidates, and the angle θ, it confirms whether or not the camera 101 also has detected the vehicle candidate in the neighborhood of the vehicle candidate which the radar 102 has detected. The comparison calculation of position is possible to judge according to whether or not both the distance L and the angle θ are close values.

In the case where there is the detection result by the camera 101 in the neighborhood of the vehicle candidate which the radar 102 has detected, it follows that detection has been made by two sensors, and the possibility that a vehicle exists at that position is high, and hence it judges that the vehicle candidate is a vehicle (S4).

In the case where there are no detection results of the camera 101 in the neighborhood of the vehicle candidate which the radar 102 has detected, it confirms whether or not there exists the object which has been judged last time as a vehicle in the neighborhood of the vehicle which the radar 102 has detected (S3). Since detection processing performs many times repeatedly on a cycle of, say, 100 ms, it is possible to use by keeping the preceding judgment results.

In the case where there exists an object which has been judged last time as a vehicle in the neighborhood of the vehicle candidate which the radar 102 has detected, it performs the processing of S4. In the case where there exists no object which has been judged last time as a vehicle in the neighborhood of the vehicle candidate which the radar 102 has detected, it is regarded as erratic detection of the radar 102 and it judges the vehicle candidate as non-vehicle (S5). That is, it becomes the tracking processing.

And, in the case where the subsequent processing is carried out, it returns to S2; otherwise, it terminates the processing (S6).

The judgment results J(t) of a certain vehicle candidate at time t becomes as follows by using the detection results $D_R(t)$ in the radar 102 and the detection results Dc(t) in the camera 101.

$$j(t) = D_R(t) \cdot D_C(t) + D_R(t) \cdot J(t-1)$$

$$= D_R(t)(D_C(t) + J(t-1))$$

$$j(t) = \begin{cases} 1: \text{It is a vehicle.} \\ 0: \text{It is not a vehicle.} \end{cases}$$

$$D_R(t) = \begin{cases} 1: \text{It was detected by the radar.} \\ 0: \text{It was not detected by the radar.} \end{cases}$$

$$D_C(t) = \begin{cases} 1: \text{It was detected by the camera.} \\ 0: \text{It was not detected by the camera.} \end{cases}$$

Since the radar 102 has less non-detection, on the basic assumption that it is detected by the radar 102, only in the case where it is judged by the camera 101 as a vehicle even once in the past including the present, it judges as the vehicle candidate. This is because the camera 101 has less erratic detection. By performing such judgment, it is possible to suppress low both erratic detection and non-detection by combination of the camera and the radar.

The judgment part 205 needs processor and memory in order to perform the above-mentioned processing. So, it is acceptable to use the processor and memory of the image processing part 202. Or, since the control content decision unit 105 also needs the same processing and possesses processor and memory, it is acceptable to realize the same function there.

According to the foregoing, by the combination of camera and radar, it is possible to provide the vehicle detection apparatus with less erratic detection and non-detection. In ACC, due to less erratic detection, it is possible to prevent erratic action of braking, and due to less non-detection, it is possible to reduce danger of excessively approaching or colliding the preceding vehicle. Also, in the pre-collision alarming apparatus, it is possible to avoid false alarm under the ordinary condition on account of less erratic detection, and it is possible to prevent malfunctioning that alarm does not work in the dangerous state of excessive approaching due to less non-detection.

List of Reference Signs

Fig. 1

| 101 | Camera |
| 102 | Radar |
| 103 | Result integration unit |
| 104 | Vehicle detection part |
| 105 | Control content decision unit |
| 106 | ACC control part |
| 107 | ECU |
| 106 | Engine |
| 109 | Brake |
| 110 | ACC execution part |

Fig. 2

| 101 | Camera |
| 102 | Radar |
| 103 | Result integration unit |
| 104 | Vehicle detection part |
| 201 | Imaging part |
| 202 | Image processing part |
| 203 | Laser transmitting/ receiving part |
| 204 | Information processing part |
| 205 | Judging part |

Fig. 3

| 201 | Imaging part |
| 202 | Image processing part |
| 301 | CCD |

302     AD converter

303     FROM

304     CPU

305     Video input

306     RAM

307     CAN

Fig. 4

101     Camera
102     Radar
103     Result integration unit

Fig. 5

S 1     Detects vehicle candidate by radar and acquires set of L and □.
S2      Detect appropriate vehicle candidate by camera for vehicle candidate which radar has detected?
S3      Correspond to that which has been judged before as a vehicle?
S4      Judges vehicle candidate as a vehicle.
S5      Judges vehicle candidate as non-vehicle.
S6      Is there next process?

Fig. 6

L       Distance
401     host vehicle
601     preceding vehicle
θ       Angle

Fig. 7

W       Vehicle width
θ       Angle
Z       Vertical distance
f       Focal length
x       Distance from the optical axis center on the CCD surface to the vehicle center position as an image on the CCD surface
301     CCD surface, comprising vehicle width w as an image on the CCD surface
401     host vehicle
601     preceding vehicle

**Claims**

1. Vehicle detection apparatus which comprises a first sensor (102) and a second sensor (101) to detect vehicles (601) ahead of the host vehicle (401), and a judging part (205) which, when the second sensor (101) detects an object which the first sensor (102) has detected, judges the object as a vehicle.

2. The vehicle detection apparatus according to claim 1, wherein the judging part (205) judges the object as a vehicle in the case where it has once judged the object as a vehicle even though the second sensor (101) does not detect the object in the next judgment.

3. The vehicle detection apparatus according to claim 1 or 2, wherein the first sensor (102) is a radar.

**4.** The vehicle detection apparatus according to any of claims 1 to 3, wherein the second sensor (101) is a camera.

**5.** The vehicle detection apparatus according to claim 4, wherein the second sensor (101) is a stereo camera.

# F I G . 1

VEHICLE DETECTION PART

101 — CAMERA    RADAR — 102

104 — RESULT INTEGRATION UNIT — 103

ACC CONTROL PART

106 — CONTROL CONTENT DECISION UNIT — 105

110 —

107 — ECU    BRAKE — 109

108 — ENGINE    ACC EXECUTION PART

# FIG.2

VEHICLE DETECTION PART — 104

101 — **CAMERA**

201 — IMAGING PART

202 — IMAGE PROCESSING PART

102 — **RADAR**

203 — LASER TRANSMITTING/ RECEIVING PART

204 — INFORMATION PROCESSING PART

103 — **RESULT INTEGRATION UNIT**

205 — JUDGING PART

# FIG.3

201

IMAGING PART

301 — CCD ——— AD CONVERTER —302

IMAGE PROCESSING PART

304

303 — FROM    CPU    VIDEO INPUT —305

306— RAM    CAN —307

202

# F I G . 4

# F I G . 5

START

DETECTS VEHICLE
CANDIDATE BY RADAR
AND ACQUIRES SET
OF L AND $\theta$ — S1

S2

DETECT
APPROPRIATE VEHICLE
CANDIDATE BY CAMERA
FOR VEHICLE CANDIDATE
WHICH RADAR HAS
DETECTED?

NO

YES

S3

CORRESPOND
TO THAT WHICH HAS
BEEN JUDGED BEFORE
AS A VEHICLE?

NO

YES

S4

JUDGES VEHICLE
CANDIDATE AS A
VEHICLE

S5

JUDGES VEHICLE
CANDIDATE AS
NON-VEHICLE

S6

YES

IS THERE
NEXT PROCESS?

NO

END

12

# F I G . 6

601

DISTANCE L   ANGLE $\theta$

401

# FIG.7

601

702

VEHICLE
WIDTH W

ANGLE θ

VERTICAL
DISTANCE Z

701

FOCAL
LENGTH F

301

VEHICLE WIDTH W AS AN
IMAGE ON THE CCD SURFACE

DISTANCE X FROM THE OPTICAL AXIS CENTER
ON THE CCD SURFACE TO THE VEHICLE CENTER
POSITION AS AN IMAGE ON THE CCD SURFACE

**Europäisches Patentamt**
**European Patent Office**
**Office européen des brevets**

# EUROPEAN SEARCH REPORT

Application Number

EP 08 01 4798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | WO 2008/004077 A (TOYOTA MOTOR CO LTD [JP]; NANAMI TAKESHI [JP]) 10 January 2008 (2008-01-10) * abstract * * paragraphs [0025] - [0032] * * paragraphs [0038] - [0042] * * figures 1,2 * | 1-5 | INV. G01S13/86 G01S13/93 |
| X | EP 1 378 762 A (FUJI HEAVY IND LTD [JP]) 7 January 2004 (2004-01-07) * paragraphs [0006], [0007], [0029] * * paragraphs [0037] - [0042], [0072] * * figure 1 * | 1-5 | |
| X | EP 1 674 883 A (HITACHI LTD [JP]) 28 June 2006 (2006-06-28) * abstract * * paragraphs [0018] - [0029] * * paragraphs [0042] - [0047], [0053] * * figures 1,2 * | 1,3-5 | |
| A | JP 2001 296357 A (FUJITSU TEN LTD) 26 October 2001 (2001-10-26) * abstract; figure 6 * | 1-5 | **TECHNICAL FIELDS SEARCHED (IPC)** G01S |

The present search report has been drawn up for all claims

| Place of search | Date of completion of the search | Examiner |
|---|---|---|
| Munich | 13 January 2009 | Lupo, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 01 4798

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2009

| Patent document cited in search report | Publication date | Patent family member(s) | | Publication date |
|---|---|---|---|---|
| WO 2008004077 A | 10-01-2008 | JP | 2008008870 A | 17-01-2008 |
| EP 1378762 A | 07-01-2004 | DE | 60316226 T2 | 12-06-2008 |
| | | JP | 2004037239 A | 05-02-2004 |
| | | US | 2004098224 A1 | 20-05-2004 |
| EP 1674883 A | 28-06-2006 | JP | 2006182086 A | 13-07-2006 |
| | | US | 2006140449 A1 | 29-06-2006 |
| JP 2001296357 A | 26-10-2001 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006048435 A
- JP 2003391589 A